# EUROPEAN PATENT SPECIFICATION

(11) **EP 3 089 825 B1**
(45) Date of publication and mention of the grant of the patent: **17.05.2017**
(21) Application number: 14833229.9
(22) Date of filing: 18.12.2014
(51) Int. Cl.: B03B 9/06, B02C 13/04, B02C 21/00, B02C 21/02, B02C 23/14, B09B 3/00, B09B 5/00, B29B 17/02, B29B 17/04, B29L 7/00

(54) **DE-ASSEMBLING SYSTEM FOR A PHOTOVOLTAIC PANEL ENABLING SALVAGE OF ORIGINAL MATERIALS**
DE-MONTAGESYSTEM FÜR EIN FOTOVOLTAIKMODUL ZUR VERWERTUNG VON AUSGANGSMATERIALIEN
SYSTÈME DE DÉMONTAGE DESTINÉ À UN PANNEAU PHOTOVOLTAÏQUE PERMETTANT LA RÉCUPÉRATION DES MATÉRIAUX ORIGINAUX

(30) Priority: 20.12.2013 IT BO20130701
(43) Date of publication of application: 09.11.2016
(73) Proprietor: La Mia Energia Scarl, 86079 Venafro (IS) (IT)
(72) Inventor: REGGI, Renato, I-03049 Sant'elia Fiumerapido (FR) (IT)
(74) Representative: Dall'Olio, Christian
(86) International application number: PCT/IB2014/067071
(87) International publication number: WO 2015/092734

(56) References cited:
- CN-A- 102 544 239
- CN-U- 202 316 491
- DE-A1-102011 000 322

## Description

The present invention relates to the technical sector of the photovoltaic panels. In particular, the invention relates to a deassembling system of a photovoltaic panel for enabling salvage of original materials of the photovoltaic panel.

As is known, a photovoltaic panel, once assembled, generally comprises:
- a protective glass layer;
- a first protective layer made of a plastic material (generally ethylene vinyl acetate EVA) arranged below the glass protective layer;
- a plurality of photovoltaic cells, arranged below the first plastic protective layer, each comprising a silicone sheet (in some cases enriched for example with gallium, tellurium, cadmium) and electric circuits;
- a second protective layer made of a plastic material (EVA) arranged below the plurality of photovoltaic cells;
- a third protective layer made of plastic material, known in the sector as a backsheet (for example a layer made of polyvinyl fluoride, also known as Tedlar) which constitutes the bottom of the photovoltaic panel and which is arranged below the second layer of plastic material.

In particular, each photovoltaic channel can differ from another for example due to the thickness of the layers, the percentages of the materials used, the dimensions etc.

In a case in which a photovoltaic panel is to be substituted (for example due to damage or because it has reached the end of its working life), it is possible to proceed with deassembly thereof, i.e. the separation of the various layers it is made of, so as to enable salvaging of the original materials of the photovoltaic panel.

Different deassembly methods of a photovoltaic panel are known, which generally comprise following steps:
- a mechanical shredding process, realised using a cutting machine, following which the photovoltaic panel is reduced to fragments;
- one or thermal processes for determining, in each fragment, detachment of one or more layers from one another;
- one or more chemical processes, during which the fragments are immersed in an acid solution so as to enable salvaging of silicon and some metals present in the photovoltaic cell.

However, the above-described known method exhibits some drawbacks.

In fact, in order to deassemble a determined photovoltaic panel, the thermal process and the chemical process of the above-described method must be planned time by time according to the type of photovoltaic panel: this means that these processes will be different from one another for example according to the thickness of the layers of panel, the type and percentage of materials used, the dimensions thereof, and so on.

In practice, therefore, chemical agents will have to be selected, and relative doses thereof, temperatures to be used, duration of the various processes. This translates into very long working times and high design costs for each type of panel to be treated.

A further drawback relates to the fact that the thermal processes give rise to the production of gases containing highly toxic substances, which require elimination treatments that are expensive and also constitute a form of environmental risk.

Further dangerous substances are contained in the water used for washing which can be used once the thermal treatment has been completed.

As regards the chemical processes, these are both expensive due to the large quantities of chemical agents used, and very dangerous for the environment.

Lastly, the energy outlay for completing the chemical and thermal processes are significant.

Documents DE 10 2011 000322 A1 and CN 102 544 239 A disclose a deassembling system of photovoltaic panels for enabling reclamation of the different materials comprised in the photovoltaic panels, according to the preamble of claim 1.

Document CN 202 316 491 U discloses a device for photovoltaic component recycling. This device gradually melts each of material components of photovoltaic component at a high temperature without burning so that toxic gas produced in burning relevant rubber and plastic material components is avoided, the influence on the surrounding environment is reduced during photovoltaic component resolving and recycling process, and the processing is environment friendly. Simultaneously, principles of centrifugal separation and air-flow rotation and the like are adopted to separately recycle solid materials after granulation thereby the material recycling of the photovoltaic component is achieved and the purity of single materials is improved when the recycling is finished.

The aim of the present invention is to obviate the above-described drawbacks.

This aim is attained with a deassembly system of a photovoltaic panel for enabling salvaging of original materials of the photovoltaic panel according to claim 1.

The solution of the invention advantageously enables deassembly of a photovoltaic panel without any need for adjustments relating to the type of photovoltaic panel, as was the case with the prior art. In other words, the present solution is "universal" for any type of photovoltaic panel. This leads to a considerable and even almost total reduction in times and design costs with respect to the prior art.

Further, the proposed solution involves modest costs with respect to the prior art since it does not necessarily require treatment of the entire photovoltaic panel with expensive chemical and/or thermal processes, necessary in the prior art.The environmental impact of the proposed solution is also significant lower with respect to the prior-art solutions.

Further advantages and specific embodiments of the invention will emerge from the following description, with the aid of the accompanying tables of drawings, in which:
- figure 1 is a schematic lateral view of a system according to the present invention, in a preferred embodiment thereof;

- figure 1A illustrates a larger-scale detail of figure 1;
- figure 2 is a perspective view of a cutting machine present in the system of the invention, in which some parts have been removed better to evidence others;
- figure 3 is a perspective view of an oscillating hammer mill present in the system of the invention;
- figure 4 is a perspective view of a fixed hammer mill present in the system of the invention.

With reference to the accompanying tables of drawings, (1) denotes a deassembling system of a photovoltaic panel for enabling salvage of original materials. Generally, a photovoltaic panel (not illustrated), once assembled, comprises: a photovoltaic cell, comprising siliceous material, copper and silver; a glass layer for protection of the photovoltaic cell; a first layer of plastic material for protecting the photovoltaic cell; a second layer of plastic material for protecting the photovoltaic cell. In particular, the photovoltaic cell is arranged between the first layer of plastic material and the second layer of plastic material.

Clearly, when the photovoltaic panel is in use, the layer of (transparent) glass is external and is arranged superiorly with respect to the first layer of plastic material (which is also transparent and comprises for example ethylene vinyl acetate, also known as EVA). In turn, the first layer is arranged above the photovoltaic cell (generally a plurality of photovoltaic cells is present) and the second layer of plastic material (for example a polyvinyl fluoride layer, also known as Tedlar).

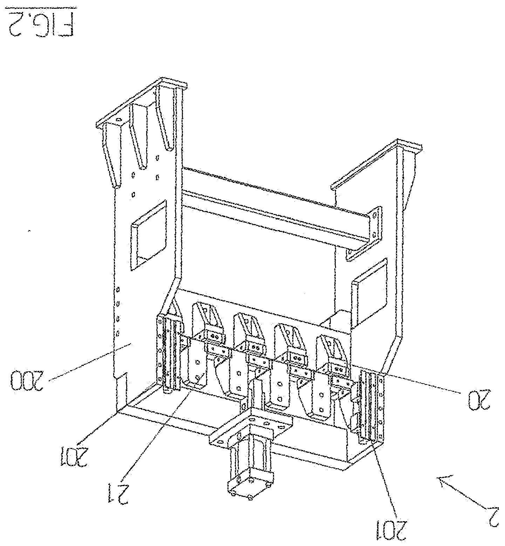

The system (1) in particular comprises: a cutting machine (2) (see in particular figure 2) in turn comprising: a counter-blade (20); a mobile blade (21) for cooperating with the counter-blade (20). In particular, the blade (21) and the counter-blade (20) are conformed so as to shred a photovoltaic panel, forming a plurality of shredded pieces.

The system (1) further comprises an oscillating hammer mill (3) comprising: a chamber (30) receiving the cut pieces; a plurality of facing teeth (31) which are arranged in a circular direction, which delimit the chamber (30) and which are solidly constrained to a frame (300) of the oscillating hammer mill (3); a drive shaft (32); a plurality of hammers (33) which are arranged in the chamber (30), which are drawn in rotation by the drive shaft (32) and which are freely rotatable with respect to the drive shaft (32) about rotation axes that are arranged along a portion of circumference which is concentric to the axis of the drive shaft (32); the hammers (33) and the teeth (31) being conformed and arranged to break up the cut pieces, forming fragments of glass and other broken pieces that are larger than the glass fragments.

Further, the system comprises first sifting means (4), which receive the fragments of glass and pieces; the first sifting means (4) comprising a sifting wall (not illustrated in the figures) provided with a plurality of meshes; the meshes being dimensioned in such a way as to enable the glass fragments to cross the meshes so as to enable salvaging thereof and so as to enable the pieces to remain on the sifting wall.

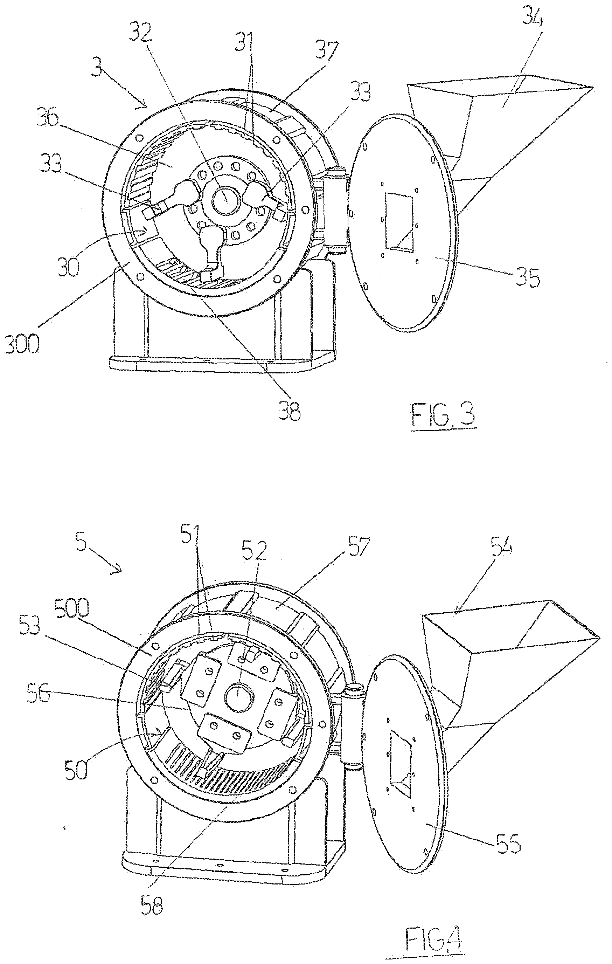

Further, the system (1) comprises a fixed hammer mill (5) (see figure 4) comprising: a chamber (50) receiving the sifted pieces from the first sifting means; a facing plurality of teeth (51) which are arranged in a circular direction, which delimit the chamber (50) and which are solidly constrained to the frame (500) of the fixed hammer mill (5); an activating drive shaft (52); a plurality of hammers (53) that are arranged in the chamber (50), which are drawn in rotation by the activating shaft (52) and which are solidly constrained to the activating shaft (52). In particular, the hammers (53) and the teeth (51) are conformed and arranged so as to break down the pieces, forming fragments of plastic material and powder material; the powder material being of smaller size than the fragments of plastic material and comprising siliceous materials, plastic materials, copper and silver.

The system (1) further comprises second sifting means (6), which receive the fragments of plastic material and the powder material. The second sifting means (6) comprise a sifting wall provided with a plurality of meshes; in particular, the meshes are sized so as to enable the powder material to cross the meshes and so as to enable the fragments of plastic material to remain on the sifting wall in order to enable salvaging thereof.

In particular, before processing the photovoltaic panels with the cutting machine (2) that is part of the system (1) of the invention, the photovoltaic panels are rid of the relative aluminium frame, if they have one. Then they are conveyed towards the cutting machine (2), for example by a first conveyor (9) which can be a part of the system (1) of the invention. For example, the first conveyor (9) can be a roller conveyor.

The cutting machine (2), with reference to figure 2, comprises for example a frame (200) to which the counter-blade (20) is fixed and with respect to which the blade (21) is constrained. For this purpose the frame (200) comprises for example guides (201) which enable the blade (21) to perform vertical outward and return runs, respectively nearingly and distancingly with respect to the counter-blade (21).

The cut pieces formed by the cutting machine (2) can for example have a parallelepiped or cubic shape (for example each side of the cube can measure one hundred millimetres). Each cut piece has a predetermined size and is constituted by all the layers which make up the photovoltaic panel.

By cutting is meant the full cutting of the photovoltaic panel which is arranged between the blade (21) and the counter-blade (20) which cooperate with one another, because of the nearing of the blade (21) to the counter-blade (20).

The cutting operation of a photovoltaic panel is entirely new in the sector. In the prior art, as mentioned in the introductory part of the present patent application, cutting machines were sometimes present which included a plurality of rotating blades acting on the photovoltaic panel up to producing shredded pieces. Therefore it is clear that the complete cut guaranteed by the cutting machine (2) of the present invention was not obtained.

The fact of using a cutting machine (2) such as the one described above makes it possible to subsequently detach the glass from each cut piece. This result could not instead be obtained using a cutting machine of the prior art: a known cutting machine, due to the blades acting by repeatedly striking the panel up to cutting it, would cause a weakening of the material, without enabling a clear detachment of the layer of glass with respect to the other layers of material (i.e. plastic material and the photovoltaic cell).

The system (1) can comprise a second conveyor (90), for conveying the cut pieces in outlet from the cutting machine (2) towards the oscillating hammers (3), which can be for example a bucket conveyor.

With reference to figure 3, the oscillating hammer mill (3) comprises a loading hopper (34) by means of which the cut pieces enter internally of the chamber (30).

In particular, the oscillating hammer mill (3), once more with reference to the figures, comprises a front wall (35), a rear wall (36) and an annular wall (37) interposed between the front wall (35) and the rear wall (36), and along which the teeth (31) are arranged. The front wall (35) is hinged to the annular wall (37). The hammers (33) can be for example three in number, as in the illustrated case, angularly spaced from one another.

The arrangement (and more in particular the distance) between the hammers (33) of the oscillating hammer mill (3) and the teeth (31) and the reciprocal conformation are regulated such as to obtain the fragments of glass and the broken pieces (which comprise plastic material, siliceous material, copper, silver and very small quantities of glass).

The oscillating hammer mill (3) further comprises at least a slit (38) along the annular wall (37), arranged such that the broken material passes through the slit (38) once it has reached a determined piece size.

Technical testing has shown that following breaking using the oscillating hammer mill (3) the majority of the glass which formed the glass layer is reduced to fragments having a smaller size than the above-described pieces. For example, the pieces have a size of greater than six millimetres, while the glass fragments have a piece size of less than six millimetres.

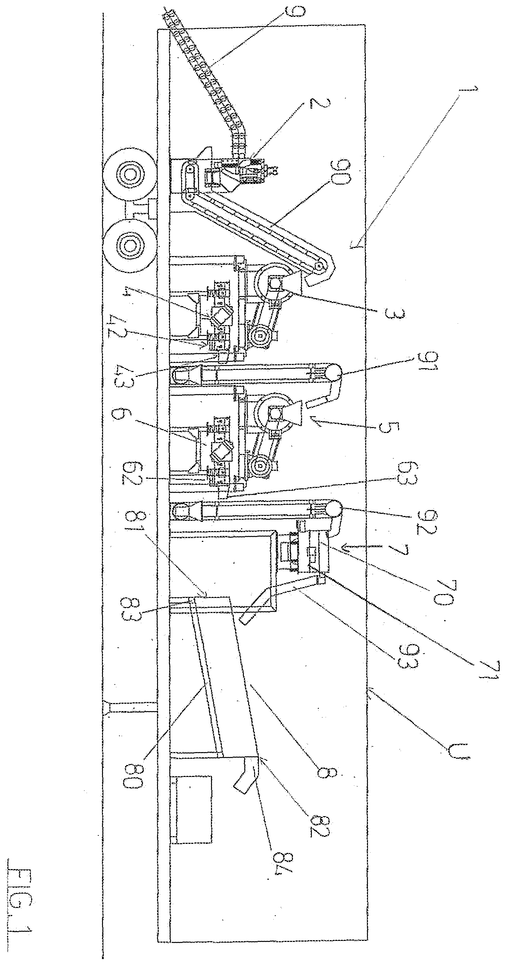

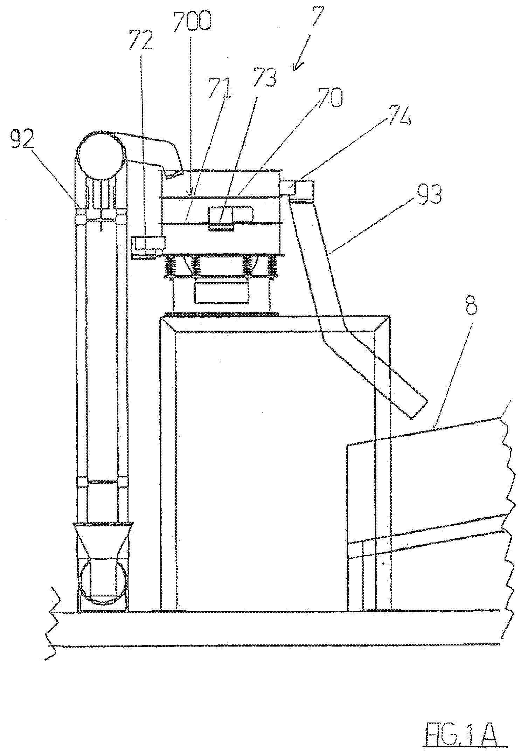

Regarding the first sifting means (4), with reference to figure 1, they can be arranged below the oscillating hammer mill (3), so that the glass fragments and the broken pieces in outlet from the slit (38) of the oscillating hammer mill (3) can fall on the sifting wall of the first sifting means (4). For example, the meshes of the sifting wall of the first sifting means (6) can be six millimetres.

The first sifting means (4) can comprise a first outlet (42) arranged below the sifting wall, so as to enable the outlet of the glass fragments; these fragments can be transported towards a line dedicated to glass salvaging. Therefore a majority of the glass present in the photovoltaic panel (about 80%) is salvaged with the system (1) of the invention.

The first screening means (4) can comprise, for example, a second outlet (43) for enabling the pieces remaining on the sifting wall to be conveyed towards the fixed-hammer mill (5).

For example, the system (1) can comprise a third conveyor (91) for conveying the pieces towards the fixed-hammer mill (5); for example, the third conveyor (91) can be a chain conveyor of a type having tubes.

The fixed-hammer mill (5) (see figure 4), like the oscillating hammer mill (3), can comprise a loading hopper (54) by means of which the pieces enter the chamber (50).

In particular, the fixed-hammer mill (5), once more with reference to the figures, comprises a front wall (55), a rear wall (56) and an annular wall (57) interposed between the front wall (55) and the rear wall (56), and along which the teeth (51) are arranged. The front wall (55) is hinged to the annular wall (57).

The hammers (53) can for example be four in number, as in the illustrated case, angularly spaced with respect to one another.

The arrangement (and more in particular the distance) between the hammers (53) and the teeth (51) and the reciprocal conformation are regulated so as to obtain fragments of plastic material and powder material which comprises siliceous material, plastic material, copper and silver.

The fixed-hammer mill (5) can further comprise at least a slit (58) along the annular wall (57), arranged such that the broken material passes through it once it has reached a certain piece size. Clearly the slit (58) of the fixed-hammer mill (5) will be smaller with respect to the slit (38) of the oscillating hammer mill (3).

The technical testing has shown that following the breaking by the fixed-hammer mill (5) the majority of the plastic material is reduced to fragments having a piece size that is greater than the above-mentioned powder material. For example, the fragments of plastic material have a piece size of greater than two millimetres, while the powder material has a piece size of smaller than two millimetres. Concerning the second sifting means (6), with reference to figure 1, the means (6) can be arranged below the fixed-hammer mill (5), so that the fragments of plastic material and the powder material exiting from the slits of the fixed-hammer mill (5) can fall onto the relative sifting wall.

For example, the meshes of the sifting wall can have a size of two millimetres.

The second sifting means (6) can comprise a first outlet (62) arranged such as to enable outlet of the fragments of plastic material; these fragments can constitute "combustible waste" and can therefore be transported towards an incinerator plant. In this way, a majority of the plastic material present in each photovoltaic panel is salvaged with the system (1) of the invention.

The second sifting means (6) can comprise, for example, a second outlet (63), arranged below the sifting wall for enabling outlet of the powder material from the second sifting means (6).

For example, the first sifting means (4) comprise a vibrating sieve, and the second sifting means (6) comprise a vibrating sieve. For example, each vibrating sieve is mobile in vertical and horizontal movements.

Further, the system (1) can comprise third sifting means (7) which receive the powder material sifted by the second sifting means (6). In particular, technical testing has shown that the copper and the plastic material of the powder material have piece sizes that are larger than the siliceous material of the powder material; further, the siliceous material of the powder material has piece sizes that are greater than the silver of the powder material.

The third sifting means (7) comprise: a first sifting wall (70) comprising a plurality of meshes (700) dimensioned so as to enable the plastic material and the copper of the powder material to remain on the first sifting wall (70) and so as to enable the silver and the siliceous material of the powder material to pass through them; and a second sifting wall (71) which receives the silver and the siliceous materials sifted by the first sifting walls and which comprises a plurality of meshes. The meshes of the second sifting wall (71) are dimensioned so as to enable the siliceous material of the powder material to remain on the second sifting wall (71) so as to enable salvage and enable the silver of the powder material to cross them so as to enable salvage thereof (see in particular figure 1A).

This embodiment advantageously enables further optimising salvaging of original materials which constitute a photovoltaic panel with respect to the above-described embodiment.

Clearly the powder material in outlet from the second sifting means (6) is received by the third sifting means (7) at the relative first sifting wall (70). With reference to the figures, the second sifting wall (71) is arranged below the first sifting wall (70).

For example, the system (1) can comprise a fourth conveyor (92) for conveying the powder material from the second outlet (63) of the second sifting means (6) to the third sifting means (7); for example, the fourth conveyor (92) is a chain conveyor.

For example, the meshes of the first sifting wall (70) of the third sifting means (7) can have a dimension of 0.5 millimetres, while the meshes of the second sifting wall (71) of the third sifting means (7) can have a size of 0.315 millimetres. Further technical testing has shown that the majority of the plastic and copper material present in the powder material has a piece size of greater than 0.5 millimetres.

Further, technical testing has shown that the majority of siliceous material present in the powder material has a piece size comprised between 0.5 millimetres and 0.316 millimetres.

The same technical testing has shown that the majority of the silver present in the powder material has a piece size of less than 0.315 millimetres.

The third sifting means (7) can comprise: a first outlet (72) (see in particular figure 1A), arranged below the second sifting wall (71) for enabling outlet of the silver; a second outlet (73), arranged below the first sifting wall (70) for enabling outlet of the siliceous material; and a third outlet (74) for enabling outlet of the plastic material and the copper.

A further variant (see figure 1 for reference), the system (1) further comprises a separating device (8) which receives the plastic material and the copper sifted by the third sifting means (7); the separating device (8) comprising an inclined wall (80) in turn comprising a first end (81) and a second end (82), opposite the first end (81) and placed at a greater height with respect to the first end (81).

The separating device (8) further comprises a plurality of dispensing nozzles (not visible in the figures) for dispensing a fluid onto the inclined wall (80) so as to convey the plastic material towards the first end (81) of the inclined wall (80) to as to enable salvage thereof and to convey the copper towards the second end (82) of the inclined wall (80) so as to enable salvage thereof.

The separating device (8) advantageously enables further salvaging the plastic material of the powder material (which can constitute the "combustible waste" and the copper of the powder material.

The separating device (8) (also known in the sector by the term "separating table") exploits the different specific weight of the copper and the plastic material. The plastic material, in fact, has a specific weight that is greater than that of copper. For this reason, following the dispensing of the fluid (for example water) by the dispensing nozzles, the plastic material will be brought towards the first end (81) of the inclined wall (80), while the copper will be brought towards the second end (82) of the inclined wall (80).

The inclined wall (80) is for example activatable so as to perform an elliptical movement.

The separating device (8) can further comprise a first outlet (83) arranged at the relative first end (81) for enabling outlet of the plastic material, and a second outlet (84), arranged at the second end (82), for enabling outlet of the copper. The system (1) can further comprise a chute (93) for conveying the copper and the plastic material from the third outlet of the third sifting means (7) to the separating device (8).

The invention further relates to a mobile unit (U) comprising the above-described system (1); the mobile unit (U) is schematically illustrated in figure 1.

## Claims

1. A deassembling system of a photovoltaic panel for enabling salvage of original materials of the photovoltaic panel, the photovoltaic panel comprising: a photovoltaic cell, comprising siliceous material, copper and silver; a glass layer for protection of the photovoltaic cell; a first layer of plastic material for protecting the photovoltaic cell; a second layer of plastic material for protecting the photovoltaic cell; the photovoltaic cell being arranged between the first layer of plastic material and the second layer of plastic material;
the system (1) being **characterised in that** it comprises:
a cutting machine (2) comprising: a counter-blade (20); a mobile blade (21) for cooperating with the counter-blade (20); the blade (21) and the counter-blade (20) being conformed so as to cut a photovoltaic panel, forming a plurality of cut pieces;
an oscillating hammer mill (3) comprising: a chamber (30) receiving the cut pieces; a plurality of facing teeth (31) which are arranged in a circular direction, which delimit the chamber (30) and which are solidly constrained to a frame (300) of the oscillating hammer mill (3); a drive shaft (32); a plurality of hammers (33) which are arranged in the chamber (30), which are drawn in rotation by the drive shaft (32) and which are freely rotatable with respect to the drive shaft (32) about rotation axes that are arranged along a portion of circumference which is concentric to the axis of the drive shaft (32); the hammers (33) and the teeth (31) being conformed and arranged to break up the cut pieces, forming fragments of glass and other broken pieces that are larger than the glass fragments;
first sifting means (4), which receive the fragments of glass and pieces; the first sifting means (4) comprising a sifting wall provided with a plurality of meshes; the meshes being dimensioned in such a way as to enable the glass fragments to cross the meshes so as to enable salvaging thereof and so as to enable the pieces to remain on the sifting wall;
a fixed hammer mill (5) comprising: a chamber (50) receiving the sifted pieces from the first sifting means; a facing plurality of teeth (51) which are arranged in a circular direction, which delimit the chamber (50) and which are solidly constrained to the frame (500) of the fixed hammer mill (5); an activating shaft (52); a plurality of hammers (53) that are arranged in the chamber (50), which are drawn in rotation by the activating shaft (52) and which are solidly constrained to the activating shaft (52); the hammers (53) and the teeth (51) being conformed and arranged so as to break down the pieces, forming fragments of plastic material and powder material; the powder material being of smaller size than the fragments of plastic material and comprising siliceous materials, plastic materials, copper and silver;
second sifting means (6), which receive the fragments of plastic material and the powder material; the second sifting means (6) comprising a sifting wall provided with a plurality of meshes; the meshes being sized so as to enable the powder material to cross the meshes and so as to enable the fragments of plastic material to remain on the sifting wall in order to enable salvaging thereof.

2. The system (1) of the preceding claim, wherein the first sifting means (4) comprise a vibrating sieve, and wherein the second sifting means (6) comprise a vibrating sieve.

3. The system (1) of claim 1 or 2, further comprising:
third sifting means (7) which receive the powder material; the copper and the plastic material of the powder material having piece sizes that are larger than the siliceous material of the powder material; the siliceous material of the powder material having piece sizes that are greater than the silver of the powder material; the third sifting means (7) comprising: a first sifting wall (70) comprising a plurality of meshes (700) dimensioned so as to enable the plastic material and the copper of the powder material to remain on the first sifting wall (70) and so as to enable the silver and the siliceous material of the powder material to pass through them; and a second sifting wall (71) which receives the silver and the siliceous materials sifted by the first sifting walls and which comprises a plurality of meshes; the meshes being dimensioned so as to enable the siliceous material of the powder material to remain on the second sifting wall so as to enable salvage and enable the silver of the powder material to cross them so as to enable salvage thereof.

4. The system (1) of the preceding claim, wherein third sifting means (7) comprise a vibrating sieve.

5. The system (1) of claim 3 or 4, further comprising a separating device (8) which receives the plastic material and the copper sifted by the third sifting means (7); the separating device (8) comprising an inclined wall (80) comprising a first end (81) and a second end (82), opposite the first end (81) and placed at a greater height with respect to the first end (81); a plurality of dispensing nozzles for dispensing a fluid onto the inclined wall (80) so as to convey the plastic material towards the first end (81) of the inclined wall (80) to as to enable salvage thereof and to convey the copper towards the second end (82) of the inclined wall (80) so as to enable salvage thereof.

## Patentansprüche

1. Demontagesystem für ein Fotovoltaikmodul zur Verwertung von Ausgangsmaterialien des Fotovoltaikmoduls, wobei das Fotovoltaikmodul Folgendes beinhaltet: ein fotovoltaische Zelle, beinhaltend siliziumhaltiges Material, Kupfer und Silber; eine Glasschicht zum Schutz der fotovoltaischen Zelle; eine erste Schicht aus Kunststoff zum Schutz der fotovoltaischen Zelle; eine zweite Schicht aus Kunststoff zum Schutz der fotovoltaischen Zelle; wobei die fotovoltaische Zelle zwischen der ersten Kunststoffschicht und der zweiten Kunststoffschicht angeordnet ist;
wobei das System (1) **dadurch gekennzeichnet ist, dass** es Folgendes beinhaltet:
eine Schneidmaschine (2), beinhaltend: eine Gegenklinge (20); eine bewegliche Klinge (21), die für das Zusammenwirken mit der Gegenklinge (20) bestimmt ist; wobei die Klinge (21) und die Gegenklinge (20) derart beschaffen sind, dass sie ein Fotovoltaikmodul zerschneiden, um eine Vielzahl geschnittener Teile zu erhalten;
eine Hammermühle mit schwingenden Schlägern (3), Folgendes beinhaltend: eine Mahlkammer (30) zur Aufnahme der geschnittenen Teile; eine Vielzahl einander zugewandter Zähne (31), die in Kreisrichtung angeordnet sind, die Kammer (30) begrenzen und die fest mit einem Rahmen (300) der Hammermühle mit schwingenden Schlägern (3) verbunden sind; eine Antriebswelle (32); eine Vielzahl von Schlägern (33), die in der Kammer (30) angeordnet sind, die durch die Antriebswelle (32) in Drehung versetzt werden und die relativ zu der Antriebswelle (32) frei um Drehachsen rotieren können, die entlang eines Teilabschnitts der Umfangslinie angeordnet sind, die konzentrisch zu der Achse der Antriebswelle (32) ist; wobei die Schläger (33) und die Zähne (31) derart beschaffen und angeordnet sind, dass sie die geschnittenen Teile brechen, so dass Glasfragmente und andere Bruchstücke entstehen, die größer sind als die Glasfragmente;
erste Siebungsmittel (4), welche die Glasfragmente und Bruchstücke empfangen; wobei die ersten Siebungsmittel (4) eine Siebwand beinhalten, die eine Vielzahl von Siebmaschen aufweist; wobei die Maschenweite so bemessen ist, dass die Glasfragmente durch die Maschen dringen können, um ihre Wiederverwertung zu ermöglichen, und dass die Bruchstücke an der Siebwand zurückgehalten werden können;
eine Hammermühle mit feststehenden Schlägern (5), Folgendes beinhaltend: eine Mahlkammer (50) zur Aufnahme der von den ersten Siebungsmitteln gesiebten Bruchstücke; eine Vielzahl einander zugewandter Zähne (51), die in Kreisrichtung angeordnet sind, die Kammer (50) begrenzen und die fest mit dem Rahmen (500) der Hammermühle mit feststehenden Schlägern (5) verbunden sind; eine Antriebswelle (52); eine Vielzahl von Schlägern (53), die in der Kammer (50) angeordnet sind, die durch die Antriebswelle (52) in Drehung versetzt werden und die fest mit der Antriebswelle (52) verbunden sind; wobei die Schläger (53) und die Zähne (51) derart beschaffen und angeordnet sind, dass sie die Bruchstücke brechen, so dass Kunststofffragmente und Pulvermaterial entstehen; wobei das Pulvermaterial eine kleinere Teilchengröße als die Kunststofffragmente aufweist und siliziumhaltige Materialien, Kunststoffe, Kupfer und Silber beinhaltet;
zweite Siebungsmittel (6), welche die Kunststofffragmente und das Pulvermaterial empfangen; wobei die zweiten Siebungsmittel (6) eine Siebwand beinhalten, die eine Vielzahl von Siebmaschen aufweist; wobei die Maschenweite so bemessen ist, dass das Pulvermaterial durch die Maschen dringen kann und dass die Kunststofffragmente an der Siebwand zurückgehalten werden können, um ihre Wiederverwertung zu ermöglichen.

2. System (1) nach dem vorhergehenden Anspruch, wobei die ersten Siebungsmittel (4) ein Rüttelsieb beinhalten, und wobei die zweiten Siebungsmittel (6) ein Rüttelsieb beinhalten.

3. System (1) nach Anspruch 1 oder 2, ferner beinhaltend:
dritte Siebungsmittel (7), welche das Pulvermaterial empfangen; wobei die im Pulvermaterial enthaltenen Kupfer- und Kunststoffteilchen eine Teilchengröße aufweisen, die größer ist als die des im Pulvermaterial enthaltenen siliziumhaltigen Materials; wobei das im Pulvermaterial enthaltene siliziumhaltige Material eine Teilchengröße aufweist, die größer ist als die der im Pulvermaterial enthaltenen Silberteilchen; wobei die dritten Siebungsmittel (7) Folgendes beinhalten: eine erste Siebwand (70), die eine Vielzahl von Siebmaschen (700) aufweist, deren Maschenweite so bemessen ist, dass das im Pulvermaterial enthaltene Kunststoffmaterial und Kupfer von der ersten Siebwand (70) zurückgehalten werden kann und dass das im Pulvermaterial enthaltene Silber und siliziumhaltige Material durch die Maschen dringen kann; und eine zweite Siebwand (71), die das von der ersten Siebwand gesiebte Silber und siliziumhaltige Material empfängt und die eine Vielzahl von Siebmaschen aufweist; wobei deren Maschenweite so bemessen ist, dass das im Pulvermaterial enthaltene siliziumhaltige Material an der zweiten Siebwand zurückgehalten werden kann, um seine Wiederverwertung zu ermöglichen, und dass das im Pulvermaterial enthaltene Silber durch die Maschen dringen kann, um seine Wiederverwertung zu ermöglichen.

4. System (1) nach dem vorhergehenden Anspruch, wobei die dritten Siebungsmittel (7) ein Rüttelsieb beinhalten.

5. System (1) nach Anspruch 3 oder 4, ferner beinhaltend eine Trennvorrichtung (8), die das von den dritten Siebungsmitteln (7) gesiebte Kunststoffmaterial und Kupfer empfängt; wobei die Trennvorrichtung (8) beinhaltet: eine schrägstehende Wand (80), die ein erstes Ende (81) und ein zweites Ende (82) aufweist, das dem ersten Ende (81) gegenüberliegt und auf einer größeren Höhe als das erste Ende (81) angeordnet ist; eine Vielzahl von Düsen zur Ausgabe eines Fluids auf die schrägstehende Wand (80), um das Kunststoffmaterial zu dem ersten Ende (81) der schrägstehenden Wand (80) zu leiten und somit dessen Wiederverwertung zu ermöglichen, und um das Kupfer zu dem zweiten Ende (82) der schrägstehenden Wand (80) zu leiten und somit dessen Wiederverwertung zu ermöglichen.

## Revendications

1. Un système de démontage d'un panneau photovoltaïque pour permettre la récupération des matériaux originaux du panneau photovoltaïque, le panneau photovoltaïque comprenant : une cellule photovoltaïque, comprenant une matière siliceuse, du cuivre et de l'argent ; une couche de verre pour la protection de la cellule photovoltaïque ; une première couche de matière plastique pour la protection de la cellule photovoltaïque ; une deuxième couche de matière plastique pour la protection de la cellule photovoltaïque ; la cellule photovoltaïque étant disposée entre la première couche de matière plastique et la deuxième couche de matière plastique ;
le système (1) étant **caractérisé en ce qu'**il comprend :
une machine à découper (2) comprenant : une contre-lame (20) ; une lame (21) mobile destinée à coopérer avec la contre-lame (20) ; la lame (21) et la contre-lame (20) étant conformées pour découper un panneau photovoltaïque, formant une pluralité de morceaux découpés ;
un broyeur à marteaux oscillants (3), comprenant : une chambre (30) qui reçoit les morceaux découpés ; une pluralité de dents face à face (31) qui sont disposées dans un sens circulaire, qui délimitent la chambre (30) et qui sont solidement contraintes à un châssis (300) du broyeur à marteaux oscillants (3) ; un arbre d'entraînement (32) ; une pluralité de marteaux (33) qui sont disposés dans la chambre (30), qui sont mis en rotation par l'arbre d'entraînement (32) et qui peuvent tourner librement par rapport à l'arbre d'entraînement (32) autour d'axes de rotation qui sont disposés le long d'une portion de circonférence qui est concentrique à l'axe de l'arbre d'entraînement (32) ; les marteaux (33) et les dents (31) étant conformés et disposés pour broyer les morceaux découpés, formant des fragments de verre et d'autres débris qui sont plus gros que les fragments de verre ;
des premiers moyens de criblage (4), qui reçoivent les fragments de verre et les débris ; les premiers moyens de criblage (4) comprenant une paroi de criblage dotée d'une pluralité de mailles ; les mailles étant dimensionnées de manière à permettre aux fragments de verre de passer au travers des mailles elles-mêmes pour permettre la récupération de ceux-ci et de manière à permettre aux débris de rester sur la paroi de criblage ;
un broyeur à marteaux fixes (5) comprenant : une chambre (50) qui reçoit les débris passés au crible provenant des premiers moyens de criblage ; une pluralité de dents face à face (51) qui sont disposées dans un sens circulaire, qui délimitent la chambre (50) et qui sont solidement contraintes au châssis (500) du broyeur à marteaux fixes (5) ; un arbre d'actionnement (52) ; une pluralité de marteaux (53) qui sont disposés dans la chambre (50), qui sont mis en rotation par l'arbre d'actionnement (52) et qui sont solidement contraints à l'arbre d'actionnement (52) ; les marteaux (53) et les dents (51) étant conformés et disposés de manière à broyer les débris, formant des fragments de matière plastique et du matériau pulvérulent ; le matériau pulvérulent ayant une taille inférieure à celle des fragments de matière plastique et comprenant des matières siliceuses, des matières plastiques, du cuivre et de l'argent ;
des deuxièmes moyens de criblage (6), qui reçoivent les fragments de matière plastique et le matériau pulvérulent ; les deuxièmes moyens de criblage (6) comprenant une paroi de criblage dotée d'une pluralité de mailles ; les mailles étant dimensionnées de manière à permettre au matériau pulvérulent de passer au travers des mailles elles-mêmes et de manière à permettre aux fragments de matière plastique de rester sur la paroi de criblage pour permettre la récupération de ceux-ci.

2. Le système (1) selon la revendication précédente, dans lequel les premiers moyens de criblage (4) comprennent un crible vibrant, et dans lequel les deuxièmes moyens de criblage (6) comprennent un crible vibrant.

3. Le système (1) selon la revendication 1 ou 2, comprenant en outre:
des troisièmes moyens de criblage (7) qui reçoivent le matériau pulvérulent ; le cuivre et la matière plastique du matériau pulvérulent ayant une granulométrie qui est supérieure à la matière siliceuse du matériau pulvérulent ; la matière siliceuse du matériau pulvérulent ayant une granulométrie qui est supérieure à l'argent du matériau pulvérulent ; les troisièmes moyens de criblage (7) comprenant : une première paroi de criblage (70) comprenant une pluralité de mailles (700) dimensionnées de manière à permettre à la matière plastique et au cuivre du matériau pulvérulent de rester sur la première paroi de criblage (70) et de manière à permettre à l'argent et à la matière siliceuse du matériau pulvérulent de passer au travers d'elles ; et une deuxième paroi de criblage (71) qui reçoit l'argent et la matière siliceuse passés au crible par la première paroi de criblage et qui comprend une pluralité de mailles ; les mailles étant dimensionnées de manière à permettre à la matière siliceuse du matériau pulvérulent de rester sur la deuxième paroi de criblage pour permettre la récupération de celle-ci et à permettre à l'argent du matériau pulvérulent de passer au travers d'elles pour permettre la récupération de celui-ci.

4. Le système (1) selon la revendication précédente, dans lequel les troisièmes moyens de criblage (7) comprennent un crible vibrant.

5. Le système (1) selon la revendication 3 ou 4, comprenant en outre un dispositif de séparation (8) qui reçoit la matière plastique et le cuivre passés au crible par les troisièmes moyens de criblage (7) ; le dispositif de séparation (8) comprenant une paroi inclinée (80) comprenant une première extrémité (81) et une deuxième extrémité (82), opposée à la première extrémité (81) et placée à une hauteur supérieure par rapport à la première extrémité (81) ; une pluralité de buses de distribution pour distribuer un fluide sur la paroi inclinée (80) de manière à acheminer la matière plastique vers la première extrémité (81) de la paroi inclinée (80) pour en permettre la récupération et de manière à acheminer le cuivre vers la deuxième extrémité (82) de la paroi inclinée (80) pour en permettre la récupération.
